# EUROPÄISCHE PATENTANMELDUNG

(11) **EP 3 667 838 A1**
(43) Veröffentlichungstag der Anmeldung: **17.06.2020**
(21) Anmeldenummer: 19210584.9
(22) Anmeldetag: 21.11.2019
(51) Int. Cl.: H01S 3/06, H01S 3/08, H01S 3/081, H01S 3/094, H01S 3/0941, H01S 3/113, H01S 3/16

(54) **GÜTEGESCHALTETER FESTKÖRPERLASER**

(30) Priorität: 14.12.2018 AT 3722018
(71) Anmelder: Kopf, Daniel, 6832 Röthis (AT)
(72) Erfinder: Kopf, Daniel, 6832 Röthis (AT)
(74) Vertreter: Hofmann, Ralf U.

(57) **Zusammenfassung**

Bei einem gütegeschalteten Festkörperlaser mit einem Resonator (3, 30) in Form eines linearen Resonators oder Ringresonators, der ein aktives Lasermaterial (1) und zumindest einen ersten und einen zweiten Spiegel (4, 5) aufweist und der eine Resonatorlänge (a) im Fall der Ausbildung als linearer Resonator von weniger als 50 mm, vorzugsweise weniger als 25 mm, und im Fall der Ausbildung als Ringresonator von weniger als 100 mm, vorzugsweise weniger als 50 mm aufweist schwingt im Resonator (3) zumindest im Wesentlichen nur ein einziger longitudinaler Mode an. Der Resonator (3, 30) ist als instabiler Resonator ausgebildet, wobei einer der Spiegel (4, 5) ein Gradientenspiegel ist.

## Beschreibung

Die Erfindung bezieht sich auf einen gütegeschalteten Festkörperlaser mit einem Resonator in Form eines linearen Resonators oder Ringresonators, der ein aktives Lasermaterial und zumindest einen ersten und einen zweiten Spiegel aufweist und der eine Resonatorlänge im Fall der Ausbildung als linearer Resontaor von weniger als 50 mm, vorzugsweise weniger als 25 mm, und im Fall der Ausbildung als Ringresonator von weniger als 100 mm, vorzugsweise weniger als 50 mm aufweist, wobei im Resonator zumindest im Wesentlichen nur ein einziger longitudinaler Mode anschwingt.

Ein derartiger Laser geht beispielsweise aus Bhandari R. und Taira T., "Palm-top size megawatt peak power ultraviolet microlaser", Optical Engineering, July 2013/Vol. 52(7), 076102-1 -076102-6 hervor. Als aktives Lasermaterial wird Nd:YAG verwendet und als passiver Güteschalter wird ein Absorber verwendet, der von einem dotierten Festkörpermaterial in Form von Cr:YAG gebildet wird. Mit einer Länge des Resonators von 10mm wird ein "free spectral range", also ein Abstand zwischen den Wellenlängen von möglichen benachbarten longitudinalen Moden erreicht, der so groß ist, dass nur einer der longitudinalen Moden derart im Verstärkungsmaximum liegt, dass dieser anschwingt. Mit diesem Laser wird eine hohe Pulsenergie von 3mJ bei einer Pulsbreite von 230 ps und einer Wiederholrate von 100 Hz erreicht. Die Wellenlänge des Lasers liegt bei 1064 nm. In dieser Schrift sind weitere Schriften zu Nd:YAG/Cr:YAG-Lasern mit hoher Pulsenergie genannt. Die Auslegung der Resonatoren ist jeweils so, dass diese optisch stabil ("stable resonator") sind. Die Ausbildung des Resonators kann monolitisch sein, wobei beide Endspiegel plan sind und im Betrieb vom aktiven Lasermaterial eine thermische Linse mit sammelnder Wirkung ausgebildet wird. Die maximal erreichbare Pulsenergie wird durch die im praktischen Betrieb erreichbare Größe des Radius des Laserstrahls begrenzt, da bei größeren Modenradien zwar eine theoretische Lösung existiert, jedoch die Kippempfindlichkeit der optischen Elemente des Resonators und die Empfindlichkeit auf Veränderungen der thermischen Linse kein robustes Produkt mehr ermöglichen. Die Folge sind optische Zerstörungen an den Beschichtungen oder im Bulk des aktiven Lasermaterials oder des Absorbers oder an der Übergangsschicht.

Gütegeschaltete Festkörperlaser mit "single longitudinal mode"-Betrieb und demgegenüber viel kleineren Pulsenergien im Bereich von einigen 10 nJ sind in Form von sehr kleinen monolithischen Mikrochip-Lasern mit Nd:YVO4 als aktivem Lasermaterial bekannt, vgl. z.B. WO 2016/004446 A1. Die Resonatorlängen können hier kleiner als 150 µm sein und es können Pulslängen von weniger als 100 ps erreicht werden. Auch diese Resonatoren sind stabil mit planen Endspiegeln und der Ausbildung einer thermischen Linse im Betrieb.

Aus Lee H.C. et al., "High energy, sub-nanosecond linearly polarized passively Q-switched MOPA laser system", Optics and Laser Technology 95 (2017) 81-85, geht ein gütegeschalteter Nd:YAG/Cr:YAG-Laser mit stabilem Resonator hervor, dessen Ausgangspulse, welche ca. 2,5 mJ-Pulsenergie und eine Pulsdauer von ca. 550 ps aufweisen, nachverstärkt werden. Das aktive Lasermaterial und der Absorber weisen hier an ihren einander zugewandten Seiten gegensinnig im Brewster-Winkel angeordnete Flächen auf, um eine Polarisationsselektion des Laserstrahls zu bewirken.

Aufgabe der Erfindung ist es einen vorteilhaften gütegeschalteten Festkörperlaser der eingangs genannten Art bereitzustellen, der mit besonders hohen Pulsenergien betreibbar ist. Erfindungsgemäß gelingt dies durch einen Laser mit den Merkmalen des Anspruchs 1.

Beim Laser gemäß der Erfindung ist der Resonator als instabiler Resonator ("unstable resonator") ausgebildet, wobei einer der Spiegel des Resonators ein Gradientenspiegel ist. Die Resonatorlänge ist hierbei, falls der Resonator als linearer Resonator (auch "stehende Wellen-Resonator" genannt) ausgebildet ist, kleiner als 50 mm, vorzugsweise kleiner als 25 mm, und, falls der Resonator als Ringresonator ausgebildet ist, kleiner als 100 mm, vorzugsweise kleiner als 50 mm. Im Falle der Ausbildung als linearer Resonator ist die Resonatorlänge die entlang der Achse des Laserstrahls gemessene Länge dieser Achse von einem Endspiegel zum anderen Endspiegel. Im Fall der Ausbildung als Ringresonator ist die Resonatorlänge die entlang der Achse des Laserstrahls gemessene Länge der Achse des Laserstrahls über einen Umlauf durch den Resonator.

Der Einsatz eines Resonators, der so kurz und hinsichtlich seiner Länge so abgestimmt ist, dass nur ein einzelner longitudinaler Mode anschwingt, in Verbindung mit einem optisch instabilen Resonator ermöglicht es bei sehr hohen Pulsenergien eine "glatte" Pulskurve zu erhalten. Um trotz seiner Kürze sehr hohe Pulsenergien zu ermöglichen, weist der instabile Resonator vorteilhafterweise mindestens ein optisches Element mit relativ großer negativer Brechkraft auf, um einen großen Strahlradius des Lasermodes zu erhalten. Hierbei wird dennoch ein stabiler Betrieb mit geringer Empfindlichkeit gegenüber Verkippungen der Elemente und den Betriebsparametern ermöglicht. Vorteilhafterweise besitzt der Resonator eine insgesamte Brechkraft, die kleiner als -2 dpt ist, d.h. die Brechkraft ist negativ und ihr Betrag ist größer als 2. Vorzugsweise ist die insgesamte Brechkraft kleiner als -4 dpt. Wenn der Resonator als linearer Resonator ausgebildet ist (auch als "stehende Wellen-Resonator" bezeichnet), so ergibt sich die insgesamte Brechkraft des Resonators aus der Summe der Brechkräfte der einzelnen optischen Elemente des Resonators, wobei die Brechkräfte der einzelnen optischen Elemente über den Hinweg vom ersten Endspiegel zum zweiten Endspiegel und den Rückweg vom zweiten Endspiegel zum ersten Endspiegel zusammengezählt werden. Die Brechkräfte der Endspiegel gehen hierbei nur einmal ein, während im Resonator zwischen den Endspiegeln angeordnete optische Elemente, also auch die vom aktiven Lasermaterial im Betrieb ausgebildete thermische Linse, mit ihren Brechkräften zweimal eingehen. Wenn der Resonator als Ringresonator ausgebildet ist, so werden die Brechkräfte der optischen Elemente über einen Umlauf im Resonator zusammengezählt, d.h. die Brechkräfte aller optischen Elemente des Resonators gehen einmal ein.

Ein erfindungsgemäßer Laser kann Pulsenergien von mehr als 1mJ aufweisen. Auch mehr als 5 mJ, vorzugweise mehr als 10 mJ sind möglich. Insbesondere bei einem Seitenpumpen des aktiven Lasermaterials sind vorteilhafterweise noch höhere Pulsenergien von mehr als 50 mJ erreichbar.

Die Pulsdauer ist vorteilhafterweise kürzer als 20 ns, bevorzugt kürzer als 10 ns. Auch Pulsdauern von weniger als 1 ns sind möglich.

Bekannte gütegeschaltete Festkörperlaser mit optisch instabilen Resonatoren weisen wesentlich größere Resonatorlängen mit einer Vielzahl von longitudinalen Moden auf. Bei den eingesetzten optischen Elementen, die eine negative Brechkraft aufweisen, ist deren Betrag relativ gering. Es können bei solchen bekannten Lasern hohe Pulsenergien bei einer - im Vergleich zu Lasern mit stabilen Resonatoren - relativ geringen Kippempfindlichkeit der optischen Elemente des Resonators und einer Unempfindlichkeit auf Veränderungen der thermischen Linse erreicht werden. Die Intensitätskurve der abgestrahlten Pulse weist aber aufgrund der Überlagerung der verschiedenen Moden Oszillationen und Spikes auf. Derartige Laser mit einem instabilen Resonator gehen beispielweise aus WO 2014/019003 A1, EP 3 117 494 A1 oder WO 2015/021488 A1 hervor.

Zur Güteschaltung weist der erfindungsgemäße Laser vorzugsweise einen passiven Güteschalter, insbesondere ein dotiertes Festkörpermaterial, auf.

Aufgrund seiner hohen Verstärkung eignet sich Nd:YAG besonders gut als aktives Lasermaterial eines erfindungsgemäßen Lasers. Als Absorber zur passiven Güteschaltung kann in diesem Fall vorteilhafterweise Cr:YAG eingesetzt werden.

In einer möglichen Ausführungsform der Erfindung erfolgt eine interne Totalreflektion des Laserstrahls an einer Seitenfläche des aktiven Lasermaterials, durch welche auch die Pumpstrahlung eingestrahlt wird. Es erfolgt hierbei eine Phasenverschiebung zwischen der s-Polarisation und p-Polarisation des Laserstrahls. Der Laser kann dabei mit seinem Verstärkungsmaximum so abgestimmt sein, dass für eine der zueinander phasenverschobenen s- und p-Polarisationen gerade ein longitudinaler Mode beim Verstärkungsmaximum des Lasers liegt und für die andere dieser Polarisationen auch der am nächsten beim Verstärkungsmaximum liegende longitudinale Mode soweit gegenüber dem Verstärkungsmaximum verschoben ist, dass sein Anschwingen zumindest im Wesentlichen verhindert wird (d.h. seine Energie ist kleiner als 10%, vorzugsweise kleiner als 1%, gegenüber dem Mode mit der selektierten Polarisation, insbesondere vollständig verhindert wird, d.h. die Laserschwelle wird nicht überschritten). Es wird dadurch in einfacher Weise ohne zusätzliche optischen Elemente eine Selektion der Polarisation des abgestrahlten Laserstrahls erreicht.

Durch die erfindungsgemäße Ausbildung wird es ermöglicht, dass der Mode im Wesentlichen durch die optische Auslegung des Resonators, inklusive des Gradientenspiegels, bestimmt ist, während der Effekt der thermischen Linse zumindest im Wesentlichen vernachlässigt werden kann. Somit wird ein stabiler Betrieb über einen weiten Pumpleistungsbereich bzw. Pulswiederholratenbereich, beispielsweise von Single Shot bis zu einer maximalen Repititionsrate (z.B. 100 Hz oder 1000 Hz) ermöglicht. Auch "Puls on demand"-Betrieb ist vorteilhaft möglich, was für viele Anwendungen bedeutend ist. Herkömmliche Laser mit sehr kurzen stabilen Resonatoren, beispielsweise entsprechend dem eingangs genannten Stand der Technik, weisen demgegenüber eine große Abhängigkeit von der thermischen Linse und somit von der Pulswiederholrate auf.

Weitere Vorteile und Einzelheiten der Erfindung werden im Folgenden anhand der beiliegenden Zeichnung erläutert. In dieser zeigen:
- Fig. 1: eine schematische Darstellung eines Lasers gemäß einem ersten Ausführungsbeispiel der Erfindung;
- Fig. 2: ein zweites erfindungsgemäßes Ausführungsbeispiel;
- Fig. 3: ein drittes erfindungsgemäßes Ausführungsbeispiel;
- Fig. 4: ein viertes erfindungsgemäßes Ausführungsbeispiel;
- Fig. 5: ein fünftes erfindungsgemäßes Ausführungsbeispiel;
- Fig. 6: ein sechstes erfindungsgemäßes Ausführungsbeispiel.

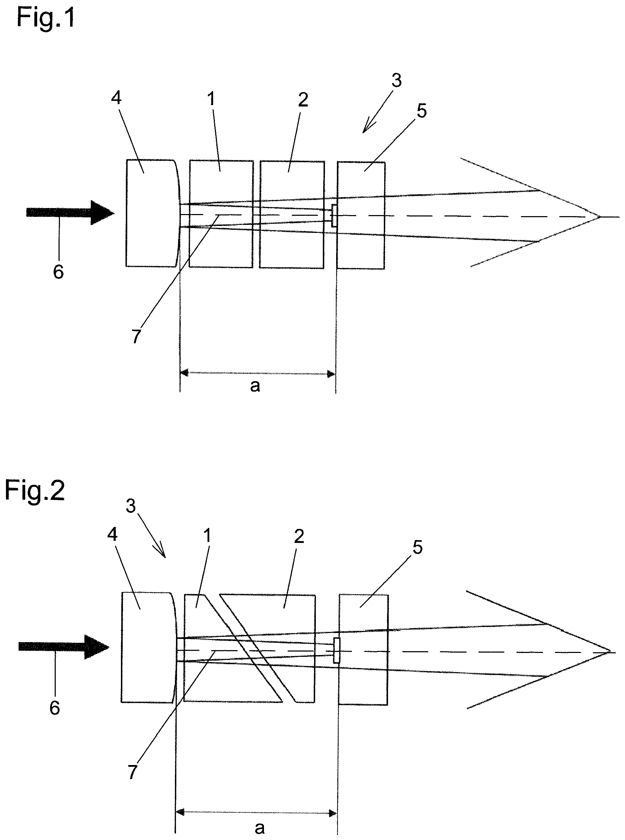

Ein erstes Ausführungsbeispiel der Erfindung ist schematisch in Fig. 1 dargestellt. Es handelt sich um einen Festkörperlaser mit einem aktiven Lasermaterial 1, welches von Nd:YAG gebildet wird. Die Dotierung kann beispielsweise bei 1,1% liegen.

Der Laser ist passiv gütegeschaltet ("Q-switched"). Als Absorber 2 dient insbesondere ein dotiertes Festkörpermaterial, im Ausführungsbeispiel Cr:YAG (genauer Cr⁴⁺:YAG). In Fig. 1 sind das aktive Lasermaterial 1 und der Absorber 2 durch einen Spalt getrennt dargestellt. Vorzugsweise sind diese beiden Elemente aber zu einer Einheit verbunden, z.B. sind sie durch Diffusion-Bonding an der jeweils polierten Oberfläche zusammengebondet. Bei einer Verwendung von keramischem Nd:YAG/Cr:YAG kann die miteinander verbundene Einheit (Sandwich-Struktur) bereits in Pulverform vor dem Sintern geschaffen werden.

Das aktive Lasermaterial 1 und der Absorber 2 sind zwischen einem ersten und einem zweiten Spiegel 4, 5 angeordnet, die die Endspiegel des Resonators 3 bilden. Der Resonator 3 umfasst also die Spiegel 4, 5, das aktive Lasermaterial 1 und den Absorber 2.

Im Ausführungsbeispiel dient der erste Spiegel 4 auch zur Einkopplung der in Fig. 1 nur schematisch durch einen Pfeil angedeuteten Pumpstrahlung 6. Dazu ist der erste Spiegel 4 dichroitisch beschichtet, wobei er für die Pumpstrahlung 6 zumindest weitgehend durchlässig (T > 95%), während er für die Wellenlänge des Laserstrahls möglichst stark reflektierend (R > 99,9%) und dementsprechend wenig durchlässig ist.

Beispielsweise beträgt die Wellenlänge der Pumpstrahlung 808 nm.

Die Wellenlänge des Laserlichts beträgt im Ausführungsbeispiel 1064 nm.

Die Einrichtung zum Pumpen selbst ist in Fig. 1 nicht dargestellt. Es kann sich um eine herkömmliche fasergekoppelte Laserdiode mit QCW("quasi continous wave")-Leistung von beispielsweise bis zu 150 W (für 250 ps Pulsdauer) handeln, die mit einer Pulswiederholrate im Bereich von 0-100 Hz betrieben wird. Der Strahldurchmesser der Pumpstrahlung kann z.B. ca. 2,5 mm betragen.

Beim zweiten Spiegel 5 handelt es sich um einen Gradientenspiegel ("gradient reflectivity mirror"; auch als "variable reflectivity mirror" bezeichnet). Derartige Gradientenspiegel sind bekannt. Die zentrale Reflektivität des Gradientenspiegels kann günstigerweise im Bereich von 30% bis 60%, z.B. bei 40%, liegen. Der Radius, bei welchem die Reflektivität des Gradientenspiegels auf e⁻² abgefallen ist, kann günstigerweise im Bereich von 1 mm bis 2 mm liegen, z.B. bei 1,5 mm.

Die Reflektivitätskurve des Gradientenspiegels (=Reflektivität als Funktion des Radius) kann insbesondere die Form einer Gaußkurve oder einer Super-Gaußkurve aufweisen.

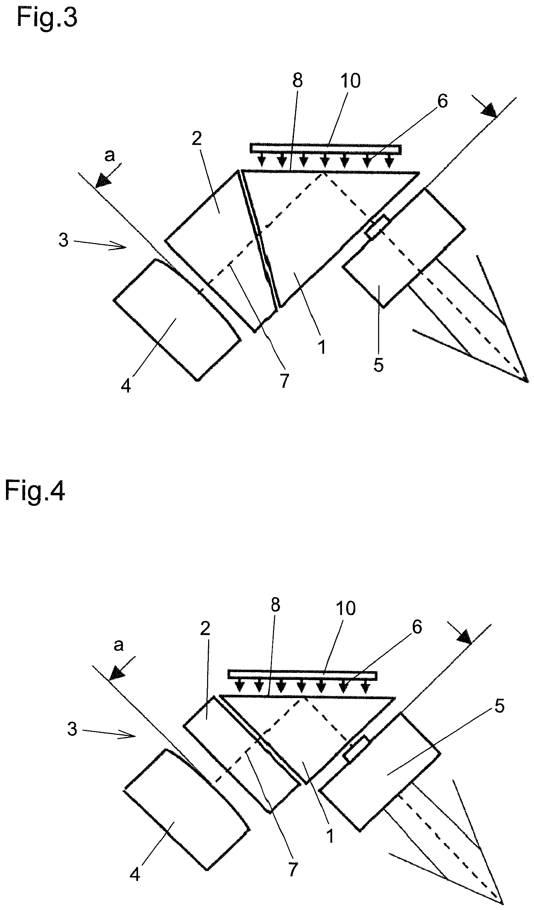

Beim Resonator 3 handelt es sich um einen linearen Resonator oder stehende Wellenresonator. Der Begriff "linearer Resonator" umfasst auch solche, bei denen der Strahlenverlauf im Resonator durch mindestens eine Reflektion innerhalb der Kavität des Resonators geknickt ist, also auch gefaltete Resonatoren. Ein anderes Funktionsprinzip stellt dagegen der Ringresonator dar, in welchem ein Umlauf der Strahlung erfolgt. Die Baulänge des Resonators von Spiegel 4 zu Spiegel 5 entspricht in diesem Ausführungsbeispiel der entlang der Achse 7 des Laserstrahls im Resonator gemessenen Länge (= Resonatorlänge a) von einem Spiegel 4 zum anderen Spiegel 5. Diese Resonatorlänge a beträgt weniger als 50 mm, vorzugsweise weniger als 25 mm, im Ausführungsbeispiel 10 mm. Würde der Laserstrahl im Resonator reflektiert (wie z.B. in den Ausführungsbeispielen gemäß den Fig. 3 bis 5), so müsste als Resonatorlänge a die "entfaltete" Länge des Resonators herangezogen werden, also wiederum die entlang der Achse des Laserstrahls gemessene Länge des Resonators von einem Spiegel zum anderen Spiegel.

Der erste Spiegel 4 ist als optisches Element mit negativer Brechkraft ausgebildet. Die Fokuslänge besitzt somit einen negativen Wert, wobei der Betrag der Fokuslänge kleiner als 500 mm, vorzugsweise kleiner als 250 mm, besonders bevorzugt kleiner als 150 mm ist. Im Ausführungsbeispiel beträgt die Fokuslänge -50 mm. Ein auf den ersten Spiegel 4 auftreffender Strahl wird also mit einer hohen Divergenz reflektiert.

Der Resonator 3 ist somit optisch instabil. Die Magnifikation des Resonators ist hierbei >1.2, im Ausführungsbeispiel beträgt sie ca. 2. Die Magnifikation ist ein Maß für die geometrische Spreizung der umlaufenden Strahlen im instabilen Resonator, d.h. bei M=2 sind die geometrischen Strahlen des Eigenmodes des instabilen Resonators bei einem Umlauf um den Faktor 2 weiter von der Achse entfernt.

Die insgesamte Brechkraft des Resonators (= die addierten Brechkräfte der optischen Elemente für einen Hin- und Rückweg durch den Resonator 3 zusammengenommen, wobei jeder der Spiegel 4, 5 nur einmal eingeht) entspricht in diesem Ausführungsbeispiel im Wesentlichen der Brechkraft des ersten Spiegels 4, da die Brechkraft der im Betrieb vom aktiven Lasermaterial 1 gebildeten thermischen Linse demgegenüber wesentlich geringer ist. Im Ausführungsbeispiel beträgt die insgesamte Brechkraft des Resonators somit ca. -20 dpt.

Der Resonator 3 ist von seiner Länge a her so abgestimmt, dass ein longitudinaler Mode der Laserstrahlung gerade beim Verstärkungsmaximum des aktiven Lasermaterials 1, im Ausführungsbeispiel bei 1064 nm liegt. Hierzu ist der Laser zweckmäßigerweise auch temperaturstabilisiert. Durch die Kürze des Resonators 3 ist der "free spectral range" so groß, dass die benachbarten longitudinalen Moden so weit außerhalb des Verstärkungsmaximums liegen, dass diese zumindest im Wesentlichen nicht anschwingen (d.h. ihre Energie beträgt weniger als 10% derjenigen des Grundmodes), insbesondere gar nicht anschwingen (d.h. die Laserschwelle wird nicht überschritten). Auch die Breite des Verstärkungsmaximums des aktiven Lasermaterials ist hierzu entsprechend klein. Der Laser weist im Betrieb also zumindest im Wesentlichen nur einen einzelnen longitudinalen Mode auf. Auch weist der Laser im Betrieb zumindest im Wesentlichen nur einen einzigen transversalen Mode auf. Die Ausbildung als instabiler Resonator begünstigt hierbei, dass transversale Moden höherer Ordnung zumindest im Wesentlichen nicht anschwingen. Der Laser ist also sowohl bezüglich transversaler als auch bezüglich longitudinaler Moden ein "single mode"-Laser.

Durch die Ausbildung mit einer negativen Brechkraft, die einen hohen Betrag aufweist, kann hierbei trotz der Kürze des Lasers eine große Modengröße erreicht werden. Günstigerweise ist der Strahlradius des Laserstrahls im aktiven Lasermaterial 1 größer als 500 µm. Es kann dadurch eine hohe Pulsenergie erreicht werden, ohne dass es zu einer optischen Zerstörung kommt. Die Pulsenergie beträgt vorzugsweise mehr als 10 mJ.

Die Verwendung von Cr:YAG als sättigbarer Absorber kann eine stabilisierende Wirkung haben. Der Absorber sättigt zunächst an den Stellen der Schwingungsbäuche des Hauptmodes (="Lochbrennen"). Dadurch wird für Nebenmoden eine höhere Absorption verursacht, weil diese vermehrt in einem nicht gesättigten Bereich ihre Schwingungsknoten haben.

Die Transmission des ungesättigten Absorbers kann in einem sehr großen Bereich liegen, z.B. im Bereich 10% bis 85%.

Die Ein- und Austrittsflächen des aktiven Lasermaterials 1 und Absorbers 2 sind vorteilhafterweise für die Wellenlänge des Laserstrahls antireflektionsbeschichtet.

Ein zweites Ausführungsbeispiel der Erfindung ist in Fig. 2 dargestellt. Abgesehen von den im Folgenden beschriebenen Unterschieden entspricht die Ausbildung derjenigen des ersten Ausführungsbeispiels und die Beschreibung des ersten Ausführungsbeispiels kann insoweit in analoger Weise herangezogen werden.

In diesem Ausführungsbeispiel sind das aktive Lasermaterial 1 und der Absorber 2 jeweils in einer sogenannten "flat-brewster"-Konfiguration geschnitten und poliert. Das aktive Lasermaterial 1 und der Absorber 2 weisen also an ihren zueinander gerichteten Seiten jeweils einen Brewster-Winkel auf, wobei diese Seiten zumindest im Wesentlichen parallel zueinander liegen, und die gegenüberliegende Seiten stehen rechtwinkelig zur Achse 7 des Laserstrahls. Die Flat-Seite ist günstigerweise wiederum mit einer Antireflektionsbeschichtung für die Laserwellenlänge beschichtet (gegebenenfalls auch für die Wellenlänge der Pumpstrahlung). Die Brewster-Flächen sind nicht notwendigerweise beschichtet. Die beiden Brewster-Flächen lassen die p-Polarisation ungehindert durch, ergeben aber einen Verlust für die s-Polarisation. Damit wird erzwungen, dass der Resonator in der p-Polarisation läuft, sodass diese zumindest im Wesentlichen nicht anschwingt kann (d.h. die Energie beträgt weniger als 10%, vorzugsweise 1%, von derjenigen des Grundmodes der p-Polarisation), insbesondere gar nicht anschwingen (d.h. die Laserschwelle wird nicht überschritten).

Um einen Etalon-Effekt für die s-Polarisation zu vermeiden, der die Verluste für die s-Polarisation verringern oder ausschalten könnte, muss der Abstand zwischen den beiden Brewster-Flächen genau gewählt werden, sodass sich keine hohe Transmission der s-Polarisation für die Wellenlängen jener s-polarisierten Moden vorliegt, die dem Verstärkungsmaximum des aktiven Lasermaterials 1 nahe sind. Stattdessen oder zusätzlich kann auch eine gegenseitige leichte Verkippung der Brewster-Flächen vorgesehen sein.

Das aktive Lasermaterial 1 und der Absorber 2 können auch in dieser Ausführungsvariante monolitisch ausgebildet sein, wobei dann zwischen den Brewster-Flächen eine dielektrische Beschichtung vorzusehen ist (ähnlich den bekannten "polarizing cubes").

Ein drittes Ausführungsbeispiel der Erfindung ist in Fig. 3 dargestellt. Abgesehen von den im Folgenden beschriebenen Unterschieden entspricht die Ausbildung derjenigen des zweiten Ausführungsbeispiels und die Beschreibung des zweiten Ausführungsbeispiels kann in analoger Weise herangezogen werden.

Die im Zusammenhang mit dem ersten und zweiten Ausführungsbeispiel eingesetzten fasergekoppelten Laserdiodenmodule als Pumpquellen haben eine limitierte Leistung und sind verhältnismäßig teuer für die verfügbare Leistung. Um die Leistung bei geringeren Kosten und geringerer Komplexität zu erhöhen, werden in diesem Ausführungsbeispiel QCW-Laserdioden-Stacks als Quelle der Pumpstrahlung verwendet. Es sind Ausbildungen bekannt, bei denen mehrere z.B. 1 cm breite, Laserdioden-Barren zu einem Laserdiodenmodul mit hoher Leistung zusammengefasst sind, das in QCW ("quasi continous wave") betrieben wird. Es ist dabei auch bekannt, die Barren direkt aufeinander zu bonden, sodass ein geringer Abstand zwischen den Barren besteht, z.B. 140 µm. Ein Stack mit 10 Barren kann somit auf einer Fläche von 10 mm x 1,4 mm emittieren, wobei der Abstrahlwinkel in der x-Richtung ca. +/- 5° beträgt und jener in der y-Richtung ca. +/- 25°, sofern keinerlei Optik verwendet wird.

Ein wesentlicher Unterschied zu den zuvor beschriebenen Ausführungsbeispielen besteht darin, dass in diesem Ausführungsbeispiel das aktive Lasermaterial seitengepumpt ist (also durch eine Fläche, die winkelig zur Achse des Laserstrahls steht). Hierzu kann ein zuvor beschriebener Stack 10, der in Fig. 3 schematisch angedeutet ist, eingesetzt werden, mit dem die Pumpstrahlung 6 direkt in das aktive Lasermaterial 1 eingestrahlt wird.

Der Laserstrahl im aktiven Lasermaterial 1 wird hierbei an dieser Seitenfläche 8, durch welche die Einstrahlung der Pumpstrahlung 6 erfolgt, durch interne Totalreflektion reflektiert.

Besonders bevorzugt ist ein Einfallswinkel des Laserstrahls von 45°, sodass die Achse 7 des Laserstrahls um 90° abgewinkelt wird. Bei einem solchen Einfallswinkel und p-Polarisation ergibt sich der Effekt, dass der einfallende und ausfallende Strahl nicht miteinander interferieren, da ihre E-Feld-Vektoren rechtwinkelig zueinander stehen. Dadurch erzeugen der einfallende und ausfallende Strahl für sich betrachtet keinerlei räumliches Lochbrennen im angeregten aktiven Lasermaterial 1, was die Modenstabilität und die Effizienz erhöht. Andernfalls könnte sogenanntes SHB ("spacial hole burning") den gain der Nebenmoden deutlich erhöhen.

Um die erwünschte p-Polarisation zu erzwingen, können das aktive Lasermaterial 1 und der Absorber 2 wie dargestellt jeweils eine Brewster-Fläche aufweisen, analog wie im zuvor beschriebenen Ausführungsbeispiel.

Die entlang der Achse 7 des Laserstrahls gemessene Länge (=Resonatorlänge a) des Resonators 3 vom ersten Spiegel 4 zum zweiten Spiegel 5 (=entfaltete Länge des Resonators) kann in diesem Ausführungsbeispiel beispielsweise 15 mm betragen. Diese Resonatorlänge a ist in Fig. 3 durch winkelig zueinander stehende Dimensionierungslinien und -pfeile angedeutet.

Ein zuvor beschriebener Laserdioden-Stack kann z.B. 2000 W Leistung für 250 µs abstrahlen, was einer Pumpenergie von 500 mJ entspricht. Es kann damit eine Energie des Laserpulses im Bereich von 100 mJ erreicht werden.

Um eine ausreichender Aufweitung der Pumpstrahlung in y-Richtung zu erzielen, kann die Luftstrecke zwischen dem Laserdioden-Stack und der Eintrittsfläche in das aktive Lasermaterial 1 beispielsweise im Bereich von 2-3 mm liegen.

Die insgesamte negative Brechkraft des Resonators 3 wird so ausgelegt, dass sich ein ausreichend großer Modenradius der Laserstrahlung ergibt. Günstigerweise liegt die Fokuslänge des ersten Spiegels 4 im Bereich von -75 mm. Es ergibt sich damit eine Magnifikation von ca. 2. Der Modenradius der Laserstrahlung kann beim Auftreffen auf den zweiten Spiegel 5 im Bereich von 3,5 mm liegen. Der Gradientenspiegel wird entsprechend ausgelegt. Der Radius, bei welchem die Reflektivität des Gradientenspiegels auf e⁻² abgefallen ist, kann hierbei im Bereich von 1,75 mm liegen.

Die Polarisationsselektion kann zusätzlich durch eine Phasenverschiebung zwischen der s- und p-Polarisation bei der totalen internen Reflektion an der Oberfläche des aktiven Lasermaterials 1 unterstützt werden. Die entfaltete Länge des Resonators 3 kann hierbei durch Feinjustage so eingestellt werden, dass nur für eine der beiden Polarisationen ein longitudinaler Mode im Verstärkungsmaximum des aktiven Lasermaterials 1 liegt, während die longitudinalen Moden für die andere Polarisation demgegenüber soweit verschoben sind, dass diese zumindest im Wesentlichen nicht anschwingen (d.h. die Energie beträgt weniger als 10%, vorzugsweise weniger als 1%, von derjenigen des Grundmodes mit der Polarisation, die eine Lage im Verstärkungsmaximum ergibt), insbesondere gar nicht anschwingen (d.h. die Laserschwelle wird nicht überschritten). Eine solche Feinjustage der Resonatorlänge kann beispielsweise durch Einstellung der Temperatur der Basisplatte, auf welcher der Laser montiert ist, erfolgen.

Der durch die totale innere Reflektion bewirkte Phasenunterschied zwischen der s- und p-Polarisation beträgt bei einem Einfallswinkel von 45° etwa 116°. Denkbar wäre auch eine Beschichtung dieser Seitenfläche 8, um einen gezielten Phasenunterschied hervorzurufen, beispielsweise von 90°. Diese Beschichtung müsste für die Wellenlänge der Pumpstrahlung durchlässig sein.

Fig. 4 zeigt ein viertes Ausführungsbeispiel der Erfindung. Die Ausbildung entspricht derjenigen des dritten Ausführungsbeispiels, abgesehen von den im Folgenden beschriebenen Unterschieden. Im Übrigen kann die Beschreibung des dritten Ausführungsbeispiels in analoger Weise herangezogen werden.

Der Unterschied zum dritten Ausführungsbeispiel besteht im Wesentlichen darin, dass die Brewster-Flächen des aktiven Lasermaterials 1 und des Absorbers 2 weggelassen wurden. Die Polarisationsselektion erfolgt hier ausschließlich aufgrund des durch die totale innere Reflektion bewirkten Phasenunterschiedes zwischen der s- und der p-Polarisation der Laserstrahlung.

In diesem Ausführungsbeispiel ist ein Bonding des aktiven Lasermaterials 1 und des Absorbers 2 ohne eine zwischengeschaltete dialektrische Schicht möglich.

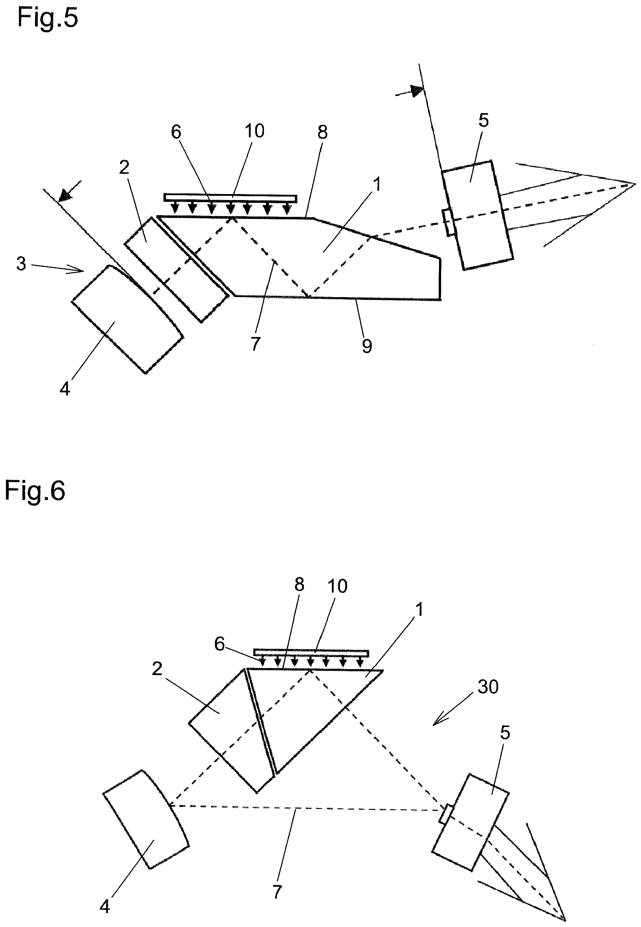

Fig. 5 zeigt ein fünftes Ausführungsbeispiel der Erfindung. Die Ausbildung entspricht derjenigen des vierten Ausführungsbeispiels, abgesehen von den im Folgenden beschriebenen Unterschieden. Im Übrigen kann die Beschreibung des vierten Ausführungsbeispiels in analoger Weise herangezogen werden.

In diesem Ausführungsbeispiel weist das aktive Lasermaterial 1 eine andere Form als im vierten Ausführungsbeispiel auf, und zwar ist es derart länger ausgebildet, dass es zu zwei totalen internen Reflektionen kommt. Wenn der Laserstrahl ausgehend vom ersten Spiegel 4 in das aktive Lasermaterial 1 eintritt (nach Durchtritt durch den Absorber 2) erfolgt zunächst eine Totalreflektion an der Seitenfläche 8, durch welche die Pumpstrahlung eingestrahlt wird. Im Weiteren erfolgt eine Totalreflektion an der gegenüberliegenden Seitenfläche 9. In der Folge tritt der Laserstrahl eine vorzugsweise im Brewster-Winkel stehende Endfläche des aktiven Lasermaterials 1 aus und gelangt von dort zum zweiten Spiegel 5. Die Abwinklungen der Achse 7 des Laserstrahls bei den beiden totalen internen Reflektionen betragen vorzugsweise jeweils 90°. Andere Winkel sind aber grundsätzlich ebenfalls denkbar und möglich.

Das in dieser Weise ausgebildete aktive Lasermaterial kann in einfacher Weise auf einer Grundplatte montiert werden. Es können auch Vorteile dieser Ausbildung in Hinblick auf ein "parasitäres Lasern" bestehen. Ein gewisser Nachteil besteht in der größeren Länge des aktiven Lasermaterials 1.

Wenn die insgesamte entfaltete Länge des Resonators kurz genug gehalten werden kann, wäre auch eine weitere totale interne Reflektion des Laserstrahls im aktiven Lasermaterial grundsätzlich denkbar und möglich.

Fig. 6 zeigt ein sechstes Ausführungsbeispiel der Erfindung. In diesem Ausführungsbeispiel ist der Resonator 30 als Ringresonator ausgebildet. In Ringresonatoren laufen mögliche Moden im Resonator um. Die Spiegel 4, 5 stellen in diesem Fall keine "Endspiegel" dar. Im gezeigten Ausführungsbeispiel des Ringresonators wird die Ringstruktur von den beiden Spiegeln 4, 5 zusammen mit einer totalen internen Reflektion im aktiven Lasermaterial 1 ausgebildet. Die Ringstruktur ist hier also im Wesentlichen "dreieckförmig". Weitere Reflektionen an spiegelnden Elementen sind denkbar und möglich, z.B. zur Ausbildung einer im Wesentlichen "viereckförmigen" Ringstruktur. Beim zweiten Spiegel 5 handelt es sich wiederum um einen Gradientenspiegel. Dieser kann in analoger Weise wie bei den zuvor beschriebenen Ausführungsbeispielen ausgebildet sein.

Der erste Spiegel 4 ist wiederum als optisches Element mit negativer Brechkraft ausgebildet. Beispielsweise kann die Fokuslänge im Bereich von -100 mm liegen.

Der Resonator 30 ist optisch instabil, wobei die Magnifikation größer 1.2 ist, beispielsweise ca. 2 betragen kann.

Beim aktiven Lasermaterial handelt es sich vorzugsweise wiederum um Nd:YAG.

Zur passiven Güteschaltung dient der Absorber 2, bei dem es sich um ein dotiertes Festkörpermaterial, insbesondere Cr:YAG handelt.

Analog zum zuvor beschriebenen zweiten Ausführungsbeispiel sind das aktive Lasermaterial 1 und der Absorber 2 in einer "flat-brewster"-Konfiguration ausgebildet. Die entsprechende Beschreibung zum zweiten Ausführungsbeispiel ist hier in analoger Weise heranziehbar.

Da es sich beim Resonator 30 um einen Ringresonator handelt, ergibt sich hier die insgesamte Brechkraft des Resonators durch die Addition aller optischen Elemente für einen Umlauf im Resonator. Jedes optische Element des Resonators 30 geht also mit seiner Brechkraft einmal ein.

Die insgesamte Brechkraft des Resonators entspricht in diesem Ausführungsbeispiel im Wesentlichen der Brechkraft des ersten Spiegels 4, da die Brechkraft der thermischen Linse demgegenüber wesentlich geringer ist. Beispielsweise kann die insgesamte Brechkraft des Resonators im Bereich von -5 dpt bis -10 dpt liegen.

Die Resonatorlänge ist die entlang der Achse 7 des Laserstrahls im Resonator 30 gemessene Länge über einen Umlauf durch den Resonator, also z.B. im Ausführungsbeispiel ausgehend vom ersten Spiegel 4 über die Totalreflektion an der Seitenfläche 8 des aktiven Lasermaterials 1 zum zweiten Spiegel 5 und von dort zurück zum ersten Spiegel 4. Diese Resonatorlänge beträgt weniger als 100 mm, vorzugsweise weniger als 50 mm. Die Resonatorlänge ist hierbei so abgestimmt, dass zumindest im Wesentlichen nur ein einziger longitudinaler Mode anschwingt (d.h. die Energie von anderen longitudinalen Moden beträgt weniger als 10%, vorzugsweise weniger als 1%, derjenigen des im Verstärkungsmaximum liegenden Modes), insbesondere andere longitudinale Moden gar nicht anschwingen (d.h. die Laserschwelle wird für diese nicht überschritten).

Wiederum weist der Laser im Betrieb auch zumindest im Wesentlichen nur einen einzigen transversalen Mode auf.

Das Seitenpumpen des aktiven Lasermaterials erfolgt in analoger Weise wie beim dritten Ausführungsbeispiel und die diesbezügliche Beschreibung kann herangezogen werden.

Auch die Unterstützung der Polarisationsselektion durch die Phasenverschiebung zwischen der s- und p-Polarisation bei der totalen internen Reflektion an der Seitenfläche 8 des aktiven Lasermaterials 1 kann in analoger Weise wie beim dritten Ausführungsbeispiel durchgeführt werden.

Auch im Fall eines Ringresonators ist es denkbar und möglich, die Brewster-Flächen des aktiven Lasermaterials 1 und des Absorbers 2 wegzulassen und eine Polarisationsselektion ausschließlich mittels des Phasensprungs bei der internen Totalreflektion durchzuführen. Auch könnte eine Polarisationsselektion grundsätzlich auch entfallen.

Unterschiedliche weitere Modifikationen der gezeigten Ausführungsbeispiele sind denkbar und möglich, ohne den Bereich der Erfindung zu verlassen.

So könnte beispielsweise ein Pumpen auch durch den zweiten Spiegel 5 erfolgen, wenn dieser so ausgeführt ist, dass er das Pumplicht hinreichend transmittiert.

Der erste und der zweite Spiegel 4, 5 könnten auch vertauscht angeordnet sein.

Zur Polarisationsselektion des Laserlichts könnten andere Winkel anstelle des Brewster-Winkels verwendet werden, z.B. 45° Winkel. Es können hierbei auch verschiedene Teile mit dazwischen liegender dielektrischer Schicht gebondet sein.

Die Polarisationsselektion könnte auch in anderer Weise als gezeigt durchgeführt werden, beispielsweise auch durch eine auf eine Beschichtung eines optischen Elements des Resonators aufgebrachte oder in diese eingebrachte Gitterstruktur. Polarisationsselektionen des Laserlichts sind in unterschiedlicher Weise bekannt. Auch wäre es denkbar und möglich, auf eine Polarisationsselektion ganz zu verzichten.

Anstelle der Ausbildung des ersten Spiegels 4 mit einer negativen Brechkraft oder zusätzlich hierzu könnte ein anderes optisches Element mit einer negativen Brechkraft vorgesehen sein.

Als aktives Lasermaterial könnte anstelle von Nd:YAG z.B. auch Yb:YAG, Er:YAG, ... verwendet werden. Nd:YAG könnte auch bei einer anderen Wellenlänge als der Hauptwellenlänge von 1064 nm betrieben werden, z.B. bei 1440 nm.

Für den Absorber können andere sättigbare Absorbermaterialien verwendet werden, z.B. Co:MALO (für Wellenlängen größer 1, 2 µm), gegebenenfalls in Verbindung mit Nd:YAG, welches bei der Nebenlinie von 1440 nm betrieben wird.

### Legende

### zu den Hinweisziffern:

- 1: aktives Lasermaterial
- 2: Absorber
- 3: Resonator
- 4: erster Spiegel
- 5: zweiter Spiegel
- 6: Pumpstrahlung
- 7: Achse
- 8: Seitenfläche
- 9: Seitenfläche
- 10: Laserdioden-Stack
- 30: Resonator

## Patentansprüche

1. Gütegeschalteter Festkörperlaser mit einem Resonator (3, 30) in Form eines linearen Resonators oder Ringresonators, der ein aktives Lasermaterial (1) und zumindest einen ersten und einen zweiten Spiegel (4, 5) aufweist und der eine Resonatorlänge (a) im Fall der Ausbildung als linearer Resonator von weniger als 50 mm, vorzugsweise weniger als 25 mm, und im Fall der Ausbildung als Ringresonator von weniger als 100 mm, vorzugsweise weniger als 50 mm aufweist, wobei im Resonator (3) zumindest im Wesentlichen nur ein einziger longitudinaler Mode anschwingt, **dadurch gekennzeichnet, dass** der Resonator (3, 30) als instabiler Resonator ausgebildet ist, wobei einer der Spiegel (4, 5) ein Gradientenspiegel ist.

2. Festkörperlaser nach Anspruch 1, **dadurch gekennzeichnet, dass** die insgesamte Brechkraft des Resonators (3, 30), die sich im Falle der Ausbildung als linearer Resonator (3) aus der Summe der Brechkräfte der optischen Elemente des Resonators (3) über den Hin- und Rückweg des Resonators (3) und im Fall der Ausbildung als Ringresonator aus der Summe der Brechkräfte der optischen Elemente des Resonators (30) über den Umlauf um den Resonator (30) ergibt, kleiner als -2 dpt, vorzugsweise kleiner als -4 dpt ist.

3. Festkörperlaser nach Anspruch 2, **dadurch gekennzeichnet, dass** der Betrag der Brechkraft einer vom aktiven Lasermaterial (1) im Betrieb ausgebildeten thermischen Linse kleiner als 10% des Betrages der insgesamten Brechkraft des Resonators (3, 30) ist.

4. Festkörperlaser nach Anspruch 1 bis 3, **dadurch gekennzeichnet, dass** der Resonator (3, 30) eine Magnifikation von mehr als 1,2 aufweist.

5. Festkörperlaser nach einem der Ansprüche 1 bis 4, **dadurch gekennzeichnet, dass** das aktive Lasermaterial (1) seitengepumpt ist.

6. Festkörperlaser nach Anspruch 5, **dadurch gekennzeichnet, dass** eine interne Totalreflektion des Laserstrahls an derjenigen Seitenfläche (8) des aktiven Lasermaterials (1) erfolgt, durch welche die Pumpstrahlung (6) eingestrahlt wird, wobei eine Phasenverschiebung zwischen einer s- und einer p-Polarisation des Laserstrahls erfolgt.

7. Festkörperlaser nach Anspruch 6, **dadurch gekennzeichnet, dass** die Resonatorlänge (a) so abgestimmt ist, dass eine der phasenverschobenen s- und p-Polarisationen beim Verstärkungsmaximum des aktiven Lasermaterials (1) liegt und die andere dieser Polarisationen so weit gegenüber dem Verstärkungsmaximum verschoben ist, dass ihr Anschwingen verhindert wird.

8. Festkörperlaser nach einem der Ansprüche 1 bis 7, **dadurch gekennzeichnet, dass** das aktive Lasermaterial (1) Nd:YAG ist.

9. Festkörperlaser nach einem der Ansprüche 1 bis 8, **dadurch gekennzeichnet, dass** der Laser als Absorber (2) ein dotiertes Festkörpermaterial aufweist.

10. Festkörperlaser nach Anspruch 9, **dadurch gekennzeichnet, dass** das dotierte Festkörpermaterial Cr:YAG ist.

11. Festkörperlaser nach einem der Ansprüche 1 bis 10, **dadurch gekennzeichnet, dass** die Pulsenergie mindestens 1 mJ, vorzugsweise mindestens 5 mJ beträgt.

12. Festkörperlaser nach einem der Ansprüche 1 bis 11, **dadurch gekennzeichnet, dass** die Pulsdauer kürzer als 20 ns, vorzugsweise kürzer als 10 ns ist.
